# EUROPÄISCHE PATENTSCHRIFT

(11) **EP 1 373 755 B1**
(45) Veröffentlichungstag und Bekanntmachung des Hinweises auf die Patenterteilung: **17.11.2004**
(21) Anmeldenummer: 02703442.0
(22) Anmeldetag: 21.03.2002
(51) Int. Cl.: F16G 1/10, F16G 5/08, B65G 15/34

(54) **BAND MIT GEWEBE MIT GLEICHSEITIGER MEHRGRATKÖPERBINDUNG**
STRIP COMPRISING A FABRIC HAVING A STITCHED TWILL WEAVE ON BOTH SIDES
BANDE AVEC TISSU PRESENTANT SUR SES DEUX FACES UNE ARMURE CROISEE A CORDONS MULTIPLES

(30) Priorität: 04.04.2001 CH 633012001
(43) Veröffentlichungstag der Anmeldung: 02.01.2004
(73) Patentinhaber: Habasit AG, 4153 Reinach (CH)
(72) Erfinder: BECELLA, Marion, CH-8001 Zürich (CH)
(74) Vertreter: Bollhalder, Renato
(86) Internationale Anmeldenummer: PCT/CH2002/000169
(87) Internationale Veröffentlichungsnummer: WO 2002/081945

(56) Entgegenhaltungen:
- GB-A- 1 176 344
- US-A- 4 767 389

## Beschreibung

Die Erfindung betrifft ein Band, das als Zugschicht ein Gewebe umfasst.

Der Ausdruck "Band" wird hier als Sammelbegriff für Antriebsriemen, Förderbänder und Prozessbänder verwendet.

Die Zugschicht eines Bandes, insbesondere Antriebsriemens, besteht häufig aus einer oder mehreren Lagen eines thermoplastischen Kunststoffes oder einer oder mehreren Lagen eines textilen Erzeugnisses, insbesondere eines Gewebes. Diese Zugschicht ist mit Gummi beschichtet.

Im Falle einer Zugschicht aus einem thermoplastischen Kunststoff ist diese beispielsweise aus einer Polyamid-Extrusionsfolie hergestellt. Eine derartige Zugschicht zeichnet sich durch eine hohe Biegesteifigkeit und durch eine geringe Druckbelastbarkeit aus.

Die Fäden der textilen Erzeugnisse, insbesondere der Gewebe, können aus synthetischen Rohstoffen hergestellt sein, wie z.B. aus Polyamiden, Aramiden, Polyestern, Polyolefinen, etc.. Sie können aber auch aus natürlichen Rohstoffen hergestellt sein, wie z.B. aus Baumwolle, aus Stengelfasern wie Flachs oder Hanf, aus Wolle, aus Seide, etc.. Weiterhin kommen auch mineralische Rohstoffe wie z.B. Glas oder Carbon als Rohstoff für die Fäden in Frage. Schliesslich kommen auch Mischungen aus allen diesen Rohstoffen in Betracht. Das Gewebe kann aus allen bekannten Garnarten hergestellt werden, wie z.B. Multifilamenten, Monofilamenten, Spinnfaserngarnen oder ein- oder mehrstufigen Zwirnen.

Im Betrieb wird die Zugschicht der Bänder, insbesondere der Antriebsriemen, grossen Belastungen ausgesetzt. Zugschichten aus thermoplastischem Kunststoff sind wenig flexibel (siehe oben) und benötigen daher grosse Rollen oder Scheiben ("pulleys"), über die sie geführt bzw. umgelenkt werden, was einen vergleichsweise hohen Verbrauch an Antriebsenergie zur Folge hat (die Masse der Rollen bzw. Scheiben muss angetrieben werden). Bei Zugschichten aus textilen Erzeugnissen ist hingegen bei hoher Flexibilität bisweilen die Kraftübertragung nicht ausreichend, weshalb häufig mehrere solche textile Zugschichten miteinander verklebt werden. Dies ist insofern nachteilig, als dadurch einerseits ein weiterer Arbeitsschritt in der Herstellung erforderlich wird, nämlich das Verkleben der textilen Zugschichten. Ausserdem steigt dadurch der materielle Aufwand, weil zwei oder mehrere textile Zugschichten benötigt werden. Vor allen Dingen wird dadurch aber eine Beeinträchtigung der Flexibilität der Zugschicht insgesamt bewirkt.

Hier will die Erfindung Abhilfe schaffen. Es ist daher eine Aufgabe der Erfindung, ein Band, insbesondere einen Antriebsriemen, vorzuschlagen, welches einerseits eine grosse Kraftübertragung ermöglicht, gleichzeitig aber flexibel bleibt.

Diese Aufgabe wird durch das Band gelöst, wie es durch die Merkmale des unabhängigen Patentanspruchs 1 charakterisiert ist. Besonders vorteilhafte Ausgestaltungen ergeben sich aus den Merkmalen der abhängigen Patentansprüche.

Die Erfindung besteht darin, dass bei einem allgemein bekannten Band, das als Zugschicht ein Gewebe umfasst, das Gewebe dadurch gekennzeichnet ist, daß es eine gleichseitige Mehrgratköperbindung umfasst.

Mit dem erfindungsgemässen Band wird ein Band bereit gestellt, das bei einer grossen Kraftübertragung gleichzeitig flexibel bleibt. Durch die Gleichseitigkeit (das Gewebe weist auf beiden Seiten die gleiche Struktur auf) der Mehrgratköperbindung wird erreicht, dass das Gewebe beidseitig verwendet werden kann, es ist also egal, welche Gewebeseite nach oben und welche nach unten zeigt. Da bei einer Mehrgratköperbindung - wie der Name bereits sagt - mehrere Typen von Graten vorhanden sind, sind auch verschieden lange Fadenflottierungen (gestreckte Fadenpartien) mit festen Abbindungen zwischen diesen Fadenflottierungen (das heisst eine Fadenverkreuzung über und unter nur einem weiteren Faden) vorhanden. Längere gestreckte Fadenpartien bedeuten eine direktere Kraftübertragung der tatsächlichen Kraft des Fadens, weil der gestreckte Faden nicht jeweils sofort wieder umgelenkt und abgebunden wird. Allerdings kann mit einer solchen Fadenflottierung ein - wenn auch geringer - Verlust der Schiebefestigkeit des Gewebes einhergehen, der aber insgesamt kaum merklich ins Gewicht fällt.

Sofern das Gewebe noch verstärkt werden soll, kann eine weitere Gewebelage konstruiert werden, welche mit der Gewebelage mit der gleichseitigen Mehrgratköperbindung bindungstechnisch verbunden ist. Auch kann das Gewebe leitfähige Fäden enthalten, was von Vorteil ist, wenn das Band sich im Betrieb durch Reibung elektrostatisch auflädt. In diesem Falle können die elektrisch leitfähigen Fäden die Ladung ableiten.

Weitere vorteilhafte Ausgestaltungen ergeben sich aus der nachfolgenden Beschreibung eines Ausführungsbeispiels des erfindungsgemässen Bandes in Form eines Antriebsriemens mit Hilfe der Zeichnung. Es zeigen:
- Fig. 1: ein Ausführungsbeispiel eines Bindungsrapports des Gewebes der Zugschicht eines erfindungsgemässen Antriebsriemens; und
- Fig. 2: eine realitätsnähere Darstellung eines Ausschnitts aus dem Gewebe mit dem Bindungsrapport aus Fig. 1.

In der folgenden Beschreibung werden die Begriffe "Bindungsrapport" und "Bindungspatrone" gebraucht. Als Bindungsrapport bezeichnet man die kleinste sich wiederholende bindungstechnische Einheit, deren Wiederholung das Gewebe bildet. Als Bindungspatrone bezeichnet man eine schematische Darstellung der Verkreuzung horizontaler Schussfäden und vertikaler Kettfäden. Die Verkreuzungspunkte werden durch Kästchen (im vorliegenden Fall durch Quadrate) symbolisiert. Ein ausgefülltes Kästchen bzw. Quadrat bedeutet, dass der betreffende Kettfaden über dem jeweiligen Schussfaden liegt und ein leeres Kästchen bzw. Quadrat bedeutet, dass der betreffende Kettfaden unter dem jeweiligen Schussfaden liegt. In einer Bindungspatrone kann entweder nur ein Rapport, mehrere ganze Rapporte oder ein Rapport und mehrere Teilrapporte dargestellt werden, um den Anschluss der Rapporte zu veranschaulichen. In den nachfolgend erläuterten Figuren ist jeweils ein Bindungsrapport dargestellt, der aber ebenso als Bindungspatrone bezeichnet werden kann.

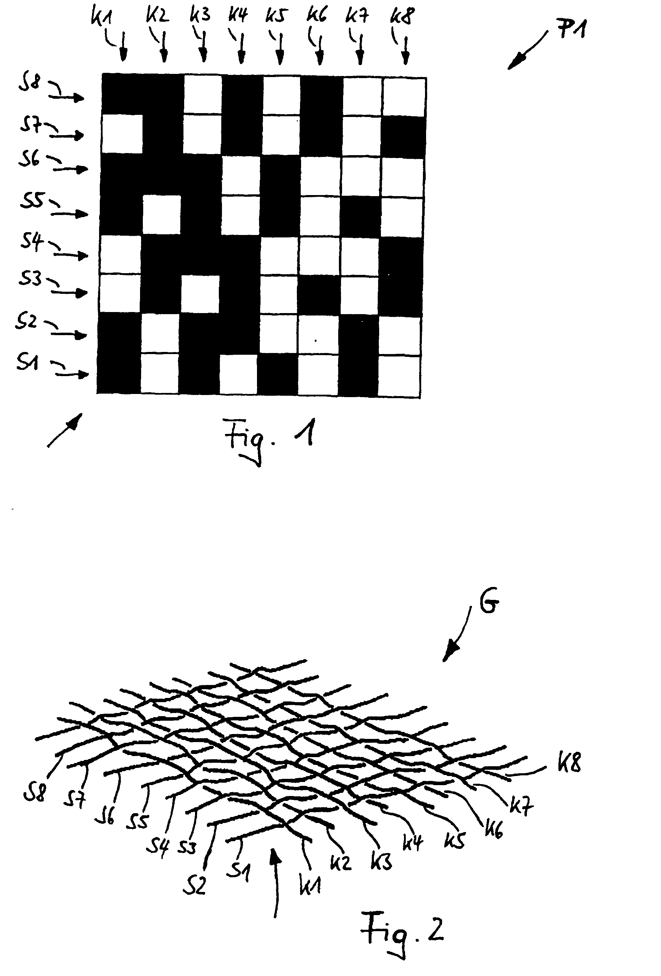

In Fig. 1 erkennt man einen Bindungsrapport bzw. eine Bindungspatrone P1 mit einem einzigen Rapport eines Ausführungsbeispiels des Gewebes G (siehe Fig. 2) der Zugschicht eines erfindungsgemässen Antriebsriemens. In der Bindungspatrone P1 sind in den Spalten jeweils die Kettfäden K1-K8 und in den Zeilen jeweils die Schussfäden S1-S8 dargestellt.

Die Bindungspatrone wird jeweils von der linken unteren Ecke her gelesen (Pfeil in Fig. 1). Demzufolge liegt der Kettfaden K1 über dem Schussfaden S1, über dem Schussfaden S2, unter den Schussfäden S3 und S4, über den Schussfäden S5 und S6, unter dem Schussfaden S7 und über dem Schussfaden S8. Zwei benachbarte oben liegende oder unten liegende Bereiche des Kettfadens, z.B. die Bereiche, wo der Kettfaden K1 über den Schussfäden S5 und S6 liegt, bezeichnet man als (Kett-) Flottierung, weil hier der Kettfaden K1 gestreckt ist und nicht sofort wieder umgebogen und von einem Schussfaden abgebunden wird. Verfolgt man den Verlauf des Kettfadens K1, so erkennt man, dass nach der 2-er Flottierung, wo der Kettfaden K1 über den Schussfäden S5 und S6 liegt, eine 2-er Flottierung folgt, bei welcher der Kettfaden K1 unter den Schussfäden S3 und S4 liegt (von der anderen Gewebeseite her betrachtet liegt dort der Kettfaden K1 entsprechend über den Schussfäden S3 und S4). Daran schliesst sich eine 3-er Flottierung, weil nämlich der Kettfaden K1 über den Schussfäden S1 und S2 und über dem Schussfaden S8 liegt. Da die dargestellte Bindungspatrone P1 gleich dem Rapport ist wird sie anschliessend wiederholt. Es ergibt sich eine 3-er Flottierung, die anschliessend abgebunden wird, weil der Kettfaden K1 dann unter dem Schussfaden S7 durchgeführt ist.

Der Kettfaden K2 liegt demzufolge unter den Schussfäden S1 und S2, über den Schussfäden S3 und S4, unter dem Schussfaden S5 und über den Schussfäden S6-S8. Der Kettfaden K3 liegt über den Schussfäden S1 und S2, unter dem Schussfaden S3, über den Schussfäden S4-S6 und schliesslich wieder unter den Schussfäden S7 und S8. Der Kettfaden K4 liegt unter dem Schussfaden S1, über den Schussfäden S2-S4, unter den Schussfäden S5 und S6, und wieder über den Schussfäden S7 und S8.

Wenn man den Verlauf der Kettfäden K5-K8 betrachtet, so handelt es sich dabei praktisch um eine Spiegelung des bisher beschriebenen Verlaufs der Kettfäden K1-K4 an der Achse A. Zusätzlich sind in der gespiegelten Hälfte (in der rechten Hälfte in Fig. 1) Hebungen und Senkungen der Kettfäden gegenüber der andern Hälfte (linke Hälfte) ausgetauscht, quasi positiv/negativ. Dies bedeutet - dadurch wird das Gewebe gleichseitig - die Anzahl oben liegender Kettfäden bzw. unten liegender Kettfäden ist auf beiden Seiten des Gewebes gleich gross.

Demzufolge verläuft der Kettfaden K5 - von der gleichen Seite her betrachtet wie die Kettfäden K1 bis K4 (also so, wie in Fig. 1 dargestellt) - über dem Schussfaden S1, unter den Schussfäden S2-S4, über den Schussfäden S5 und S6 und wieder unter den den Schussfäden S7 und S8. Der Kettfaden K6 verläuft unter den Schussfäden S1 und S2, über dem Schussfaden S3, unter den Schussfäden S4-S6 und wieder über den Schussfäden S7 und S8. Der Kettfaden K7 verläuft über den Schussfäden S1 und S2, unter den Schussfäden S3 und S4, über dem Schussfaden S5 und wieder unter den Schussfäden S6-S8. Der Kettfaden K8 schliesslich verläuft unter den Schussfäden S1 und S2, über den Schussfäden S3 und S4, unter den Schussfäden S5 und S6, über dem Schussfaden S7 und unter dem Schussfaden S8.

In Fig. 2 erkennt man einen Ausschnitt aus einem Gewebe G, welches zu der anhand von Fig. 1 beschriebenen Bindungspatrone P1 gehört. Damit man erkennen kann, dass dies auch der Fall ist, sind in Fig. 2 sowohl die Kettfäden K1-K8 als auch die Schussfäden S1-S8 entsprechend gekennzeichnet.

Die Bindungspatrone P1 in Fig. 1 steht für eine Mehrgratköperbindung. Dies ist wie folgt zu erkennen: Betrachtet man zunächst die linke Hälfte der Bindungspatrone, wird ein erster Grat durch die 3-er Gruppen mit den Feldern K1/S8,S1,S2; K2/S6-S8; K3/S4-S6; K4/S2-S4 gebildet. Bei den Feldern K1/S8,S1,S2 ist dabei zu berücksichtigen, dass diese Bindungspatrone als Rapport (kleinste wiederholbare bindungstechnische Einheit) im Gewebe allseitig wiederholt wird. Infolgedessen bilden in der linken Hälfte die vier genannten 3-er Gruppen einen ersten Grat.

Weiterhin kann man einen zweiten Grat in der linken Hälfte der Bindungspatrone P1 in Fig. 1 erkennen. Dieser zweite Grat wird gebildet durch die 2-er Gruppen mit den Feldern K1/S5,S6; K2/S3,S4; K3/S1,S2; K4/S7,S8. Dabei ist zu beachten, dass diese Bindungspatrone als Rapport (kleinste wiederholbare bindungstechnische Einheit) im Gewebe allseitig wiederholt wird. Infolgedessen bilden in der linken Hälfte die vier genannten 2-er Gruppen einen zweiten Grat.

Was die rechte Hälfte der Bindungspatrone P1 betrifft, so kann man entsprechend einen dritten und einen vierten Grat erkennen, allerdings verlaufen diese Grate - da die rechte Hälfte der Bindungspatrone gespiegelt ist - in die entgegengesetzte Richtung.

Dementsprechend wird in der rechten Hälfte der dritte Grat der Bindungspatrone P1 (der auf der anderen Gewebeseite verläuft) durch die 3-er Gruppen K5/S2-S4; K6/S4-S6; K7/S6-S8; und K8/S8,S1,S2 gebildet.

Der vierte Grat befindet sich ebenfalls in der rechten Hälfte der Bindungspatrone und wird von den 2-er Gruppen K5/S7,S8; K6/S1,S2; K7/S3,S4 und K8/S5,S6 gebildet.

In beiden Hälften der Bindungspatrone existieren also jeweils zwei Typen von Graten (ein 3-er-Gruppen umfassender Grat und ein 2-er-Gruppen umfassender Grat), weshalb es sich bei dem gezeigten Ausführungsbeispiel um eine Mehrgratköperbindung handelt. Eine Mehrgratköperbindung ist eine Köperbindung, die innerhalb des Bindungsrapports mehrere Grate aufweist (Köperbindungen bewirken mit ihren Gratlinien eine diagonale Zeichnung des Gewebes). Ausserdem sind beide Seiten des Gewebes gleich ausgebildet, es existiert also keine Vorder- und Rückseite. Somit handelt es sich bei dem beschriebenen Ausführungsbeispiel um eine gleichseitige Mehrgratköperbindung.

Selbstverständlich müssen die Grate nicht in der beschriebenen Weise ausgebildet sein, es müssen also nicht zwingend 2-er und 3-er Gruppen von Köperbindungen sein, welche die Grate bilden. Es müssen jedoch die Gewebeseiten so ausgebildet sein, dass auf beiden Gewebeseiten Köperbindungen vorhanden sind, die mehrere Grate bilden und die Seiten des Gewebes müssen gleich ausgebildet sein.

Weiterhin kann dieses Gewebe konstruktiv mit einer weiteren Gewebelage bindungstechnisch verbunden sein. Dies kann speziell so erfolgen, dass auch nach dieser Einbindung der weiteren Gewebelage ein gleichseitiges Gewebe resultiert. Auf diese Weise kann das Gewebe mit der gleichseitigen Mehrgratköperbindung noch verstärkt werden.

Ferner kann das Gewebe leitfähige Fäden enthalten, was insbesondere im Hinblick darauf vorteilhaft ist, dass Antriebsriemen - um Antrieb zu gewährleisten - und andere Bänder immer Reibung auf der Fläche eines Antriebselements (z.B. einer Metallscheibe) erzeugen. Dabei kann eine elektrostatische Aufladung entstehen. An der räumlichen Trennstelle der beiden reibenden Körper - also z.B. dort, wo der Antriebsriemen den Kontakt mit der Scheibe verliert - kann dann eine Funkenentladung auftreten. Elektrisch leitfähige Fasern bewirken, dass diese Funkenbildung verhindert wird, indem sie z.B. die Ladung zu einer Stelle transportieren, an welcher der Antriebsriemen mit einem elektrisch geerdeten Bauteil oder Fläche (z.B. an der Metallscheibe) in Berührung steht, sodass die Ladung ohne Funkenbildung abgeführt werden kann.

Für die Kettfäden bzw. Schussfäden können Garne verwendet werden, die als Endlosgarne (Monofilamente, Multifilamente) ausgebildet sein können oder die auch Spinnfasergarne oder ein- oder mehrstufige Zwirne (Zwirne sind zwei miteinander verdrehte Garne, mehrstufige Zwirne sind mehrere miteinander verdrehte Zwirne) sein können.

Die Garnstärke kann dabei in Abhängigkeit von der Anzahl der Fäden pro Zentimeter sowohl für die Kettfäden als auch für die Schussfäden im Bereich von etwa 3 tex bis etwa 300 tex variieren.

Die Fadendichte kann abhängig von der Garnstärke sowohl in Kettrichtung als auch in Schussrichtung im Bereich von etwa 4/cm bis etwa 4000/cm variieren. Dabei kann das Gewebe in Kettrichtung und in Schussrichtung gleiche oder auch unterschiedliche Fadenzahlen (Fadendichten) aufweisen.

Als Fasergrundstoffe kommen sowohl natürliche Grundstoffe wie z.B. Baumwolle, Stengelfasern (z.B. Flachs, Hanf), Wolle, Seide sowie Ramie, etc. in Frage, wie auch synthetische Grundstoffe wie z.B. Polyester, Polyamide, Polyolefine, Aramide, etc., wie auch mineralische Grundstoffe wie z.B. Glas und Kohlenstoff (Karbon), etc., sowie Mischungen aus diesen Grundstoffen.

## Patentansprüche

1. Band, das als Zugschicht ein Gewebe (G) umfasst, welches eine gleichseitige Mehrgratköperbindung umfasst.

2. Band nach Anspruch 1, bei welchem die kleinste bindungstechnische Einheit (P1) des Gewebes (G) nach folgendem Muster ausgebildet ist: 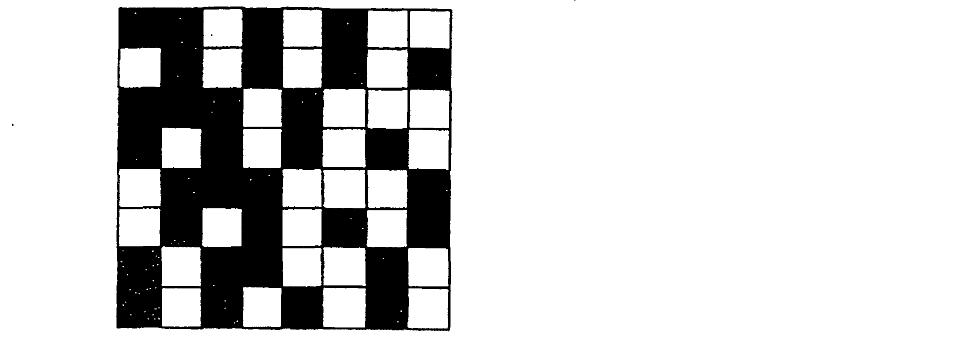 in welchem Muster die Spalten jeweils die Kettfäden (K1-K8) darstellen und die Zeilen jeweils die Schussfäden (S1-S8), und in welchem Muster ein dunkles Feld bedeutet, dass der Kettfaden (K1-K8) über dem Schussfaden (S1-S8) liegt, und in welchem ein helles Feld bedeutet, dass der Kettfaden (K1-K8) unter dem Schussfaden (S1-S8) liegt.

3. Band nach Anspruch 1, bei welchem das Gewebe (G) der Zugschicht ausser der Gewebelage mit der gleichseitigen Mehrgratköperbindung mindestens eine weitere Gewebelage umfasst, die bindungstechnisch mit der Gewebelage verbunden ist, welche die gleichseitige Mehrgratköperbindung aufweist.

4. Band nach einem der Ansprüche 1 bis 3, bei welchem das Gewebe (G) leitfähige Fäden enthält.

5. Band nach einem der Ansprüche 1 bis 4, **dadurch gekennzeichnet, dass** es ein Antriebsriemen ist.

6. Band nach einem der Ansprüche 1 bis 4, **dadurch gekennzeichnet, dass** es ein Förderband ist.

7. Band nach einem der Ansprüche 1 bis 4, **dadurch gekennzeichnet, dass** es ein Prozessband ist.

## Claims

1. A belt comprising a traction layer comprising a woven fabric (G) comprising an even-sided plural-wale twill weave.

2. A belt according to claim 1, wherein the smallest weave unit (P1) of the woven fabric (G) is constructed according to the following pattern: 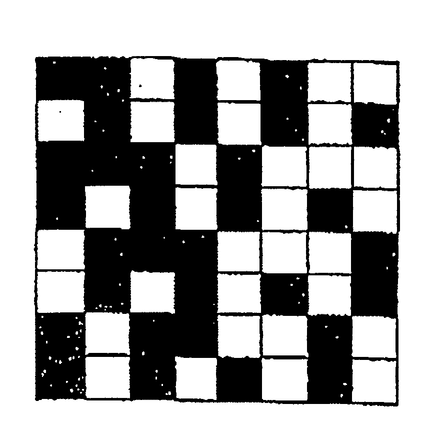 where the columns each represent the warp threads (K1-K8) and the rows each represent the weft threads (S1-S8), a dark field in this pattern denoting that the warp thread (K1-K8) passes over the weft thread (S1-S8) and a light-colored field in this pattern denoting that the warp thread (K1-K8) passes under the weft thread (S1-S8).

3. A belt according to claim 1, wherein the woven fabric (G) of the traction layer, in addition to the woven fabric ply comprising the even-sided plural-wale twill weave, comprises at least one further woven fabric ply which interlaces with the woven fabric ply comprising the even-sided plural-wale twill weave.

4. A belt according to any one of claims 1 to 3, wherein the woven fabric (G) contains conductive threads.

5. A belt according to any of claims 1 to 4, **characterized in that** it is a drive belt.

6. A belt according to any of claims 1 to 4, **characterized in that** it is a conveyor belt.

7. A belt according to any of claims 1 to 4, **characterized in that** it is a process belt.

## Revendications

1. Bande, qui comprend comme couche de traction un tissu (G), qui comprend une armure croisée équilatérale à cordons multiples.

2. Bande selon la revendication 1, dans laquelle la plus petite unité (P1) de technique d'armure du tissu (G) est conçue selon le modèle suivant : 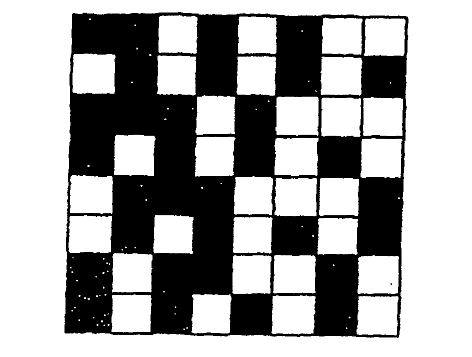 modèle dans lequel les colonnes représentent respectivement les fils de chaîne (K1 à K8) et les rangées respectivement les fils de trame (S1 à S8), et modèle dans lequel une case foncée signifie que le fil de chaîne (K1 à K8) est au-dessus du fil de trame (S1 - S8), et dans lequel une case claire signifie que le fil de chaîne (K1 à K8) est au-dessous du fil de trame (S1 à S8).

3. Bande selon la revendication 1, dans laquelle le tissu (G) de la couche de traction comprend en dehors de la couche de tissu avec l'armure croisée équilatérale à cordons multiples au moins une autre couche de tissu, qui est reliée au niveau de la technique d'armure à la couche de tissu qui présente l'armure croisée équilatérale à cordons multiples.

4. Bande selon l'une quelconque des revendications 1 à 3, dans laquelle le tissu (G) contient des fils électroconducteurs.

5. Bande selon l'une quelconque des revendications 1 à 4, **caractérisée en ce que** cette bande est une courroie d'entraînement.

6. Bande selon l'une quelconque des revendications 1 à 4, **caractérisée en ce que** cette bande est une bande transporteuse.

7. Bande selon l'une quelconque des revendications 1 à 4, **caractérisée en ce que** cette bande est une bande de procédé.
